(19) Europäisches Patentamt
European Patent Office
Office européen des brevets

(11) **EP 4 350 801 A1**

(12) **EUROPEAN PATENT APPLICATION**
published in accordance with Art. 153(4) EPC

(43) Date of publication:
**10.04.2024 Bulletin 2024/15**

(21) Application number: **22815781.4**

(22) Date of filing: **06.05.2022**

(51) International Patent Classification (IPC):
*H01M 4/13* (2010.01)    *H01M 4/36* (2006.01)
*H01M 4/525* (2010.01)    *H01M 10/052* (2010.01)
*H01M 10/0562* (2010.01)

(52) Cooperative Patent Classification (CPC):
**H01M 4/13; H01M 4/36; H01M 4/525;**
**H01M 10/052; H01M 10/0562;** Y02E 60/10

(86) International application number:
**PCT/JP2022/019577**

(87) International publication number:
**WO 2022/255026 (08.12.2022 Gazette 2022/49)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.05.2021 JP 2021091718**

(71) Applicant: **Panasonic Intellectual Property**
**Management Co., Ltd.**
**Kadoma-shi, Osaka 571-0057 (JP)**

(72) Inventors:
• **NAGAO, Kenji**
**Tokyo 103-0022 (JP)**
• **SUGIMOTO, Yuta**
**Tokyo 103-0022 (JP)**
• **HASHIMOTO, Kazuya**
**Tokyo 103-0022 (JP)**
• **SASAKI, Izuru**
**Tokyo 103-0022 (JP)**

(74) Representative: **Grünecker Patent- und**
**Rechtsanwälte**
**PartG mbB**
**Leopoldstraße 4**
**80802 München (DE)**

(54) **COATING ACTIVE MATERIAL, POSITIVE ELECTRODE MATERIAL, POSITIVE ELECTRODE, BATTERY**

(57) A coated active material 110 includes a positive electrode active material 101 and a coating layer 104 coating at least a portion of a surface of the positive electrode active material 101. The coating layer 104 includes a first coating layer 102 and a second coating layer 103. The first coating layer 102 is located outside of the second coating layer 103. A percentage of change in specific surface area from a specific surface area of the positive electrode active material 101 coated with the second coating layer 103 to a specific surface area of the coated active material 110 is greater than or equal to -62.8% and less than or equal to +3.79%.

FIG. 3

**Description**

Technical Field

The present disclosure relates to a coated active material, a positive electrode material, a positive electrode, and a battery.

Background Art

Patent Literature 1 describes a method for producing a composite active material including coating a positive electrode active material with an oxide solid electrolyte and, further, with a sulfide solid electrolyte.

Citation List

Patent Literature

PTL 1: Japanese Unexamined Patent Application Publication No. 2016-18735

Summary of Invention

In the related art, there is a need for further reducing a resistance of a battery.
The present disclosure provides a coated active material including a positive electrode active material and a coating layer coating at least a portion of a surface of the positive electrode active material. The coating layer includes a first coating layer and a second coating layer. The first coating layer is located outside of the second coating layer. A percentage of change in specific surface area from a specific surface area of the positive electrode active material coated with the second coating layer to a specific surface area of the coated active material is greater than or equal to -62.8% and less than or equal to +3.79%.
With the present disclosure, a resistance of a battery can be reduced.

Brief Description of Drawings

[Fig. 1] Fig. 1 is a cross-sectional view illustrating a schematic configuration of a coated active material of a first embodiment.
[Fig. 2] Fig. 2 is a cross-sectional view illustrating a schematic configuration of a positive electrode material of a second embodiment.
[Fig. 3] Fig. 3 is a cross-sectional view illustrating a schematic configuration of a battery of a third embodiment.

Description of Embodiments

(Underlying Knowledge Forming Basis of the Present Disclosure)

For example, in instances where a positive electrode active material is in contact with a sulfide solid electrolyte, the sulfide solid electrolyte may undergo oxidative decomposition during the charging of a battery. One approach for addressing this problem is to coat a surface of the active material with a material having excellent oxidation stability, such as an oxide solid electrolyte.
The present inventors noticed that the characteristics of batteries, such as, in particular, interfacial resistance, vary significantly, even in instances in which the material that coats the active material is the same. Furthermore, the present inventors discovered that the variation is associated with a percentage of change in specific surface area of the active material as compared before and after the application of the coating material. Accordingly, the present inventors conceived of the present disclosure.

(Overview of Aspects of the Present Disclosure)

According to a first aspect of the present disclosure, a coated active material includes

a positive electrode active material; and

a coating layer coating at least a portion of a surface of the positive electrode active material, in which
the coating layer includes a first coating layer and a second coating layer,
the first coating layer is located outside of the second coating layer, and
a percentage of change in specific surface area from a specific surface area of the positive electrode active material coated with the second coating layer to a specific surface area of the coated active material is greater than or equal to -62.8% and less than or equal to +3.79%.

The coated active material of the first aspect can reduce a resistance of a battery.

In a second aspect of the present disclosure, the coated active material according to the first aspect may be one in which, for example, the percentage of change is greater than or equal to -56.6% and less than or equal to 0%. With this configuration, an effect of inhibiting interfacial resistance of a battery is further enhanced.

In a third aspect of the present disclosure, the coated active material according to the first aspect may be one in which, for example, the percentage of change is greater than or equal to -24.0% and less than or equal to -13.0%. With this configuration, an effect of inhibiting interfacial resistance of a battery is further enhanced.

In a fourth aspect of the present disclosure, the coated active material according to any one of the first to third aspects may be one in which, for example, the first coating layer contains a first solid electrolyte, and the first solid electrolyte contains Li, M, and X, where M is at least one selected from the group consisting of metalloid elements and metal elements other than Li, and X is at least one selected from the group consisting of F, Cl, Br, and I. Such materials have excellent ionic conductivity and oxidation resistance.

In a fifth aspect of the present disclosure, the coated active material according to the fourth aspect may be one in which, for example, M includes yttrium. In the instance where M includes Y, the first solid electrolyte exhibits high ionic conductivity.

In a sixth aspect of the present disclosure, the coated active material according to any one of the first to fifth aspects may be one in which, for example, the first coating layer contains a first solid electrolyte, the first solid electrolyte is represented by Formula 1, shown below, and $\alpha$, $\beta$, and $\gamma$ are each independently a value greater than 0. In the instance where a halide solid electrolyte represented by Formula 1 is used in a battery, power characteristics of the battery can be improved.

$$Li_\alpha M_\beta X_\gamma \qquad (1)$$

In a seventh aspect of the present disclosure, the coated active material according to any one of the first to sixth aspects may be one in which, for example, the second coating layer contains a base material, and the base material contains a lithium-containing oxide. In the instance where a lithium-containing oxide is used as the base material, charge-discharge efficiency of a battery can be improved.

In an eighth aspect of the present disclosure, the coated active material according to any one of the first to seventh aspects may be one in which, for example, the second coating layer contains a base material, and the base material contains an oxide solid electrolyte having lithium ion conductivity. In the instance where an oxide solid electrolyte is used as the base material, the charge-discharge efficiency of a battery can be improved.

In a ninth aspect of the present disclosure, the coated active material according to any one of the first to eighth aspects may be one in which, for example, the second coating layer contains a base material, and the base material contains lithium niobate. With this configuration, the charge-discharge efficiency of a battery can be improved.

According to a tenth aspect of the present disclosure, a positive electrode material includes

the coated active material according to any one of the first to ninth aspects; and
a second solid electrolyte.

The positive electrode material of the tenth aspect can reduce the resistance of a battery.

In an eleventh aspect of the present disclosure, the positive electrode material according to the tenth aspect may be one in which, for example, the second solid electrolyte contains Li and S. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte that is included in a battery is a sulfide solid electrolyte, the technology of the present disclosure can be used to produce a superior effect.

According to a twelfth aspect of the present disclosure, a positive electrode includes the positive electrode material according to the tenth or eleventh aspect.

The positive electrode of the twelfth aspect can reduce the resistance of a battery.

According to a thirteenth aspect of the present disclosure, a battery includes

the positive electrode according to the twelfth aspect;
a negative electrode; and
an electrolyte layer disposed between the positive electrode and the negative electrode.

With regard to the thirteenth aspect, a battery having reduced interfacial resistance can be provided.

Embodiments of the present disclosure will be described below with reference to the drawings. The present disclosure is not limited to the embodiments described below.

(First Embodiment)

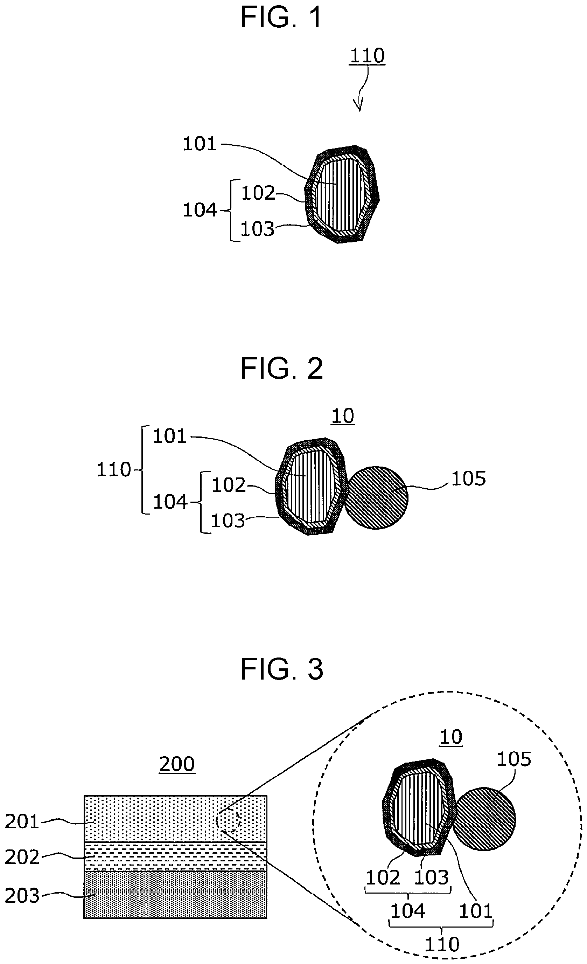

Fig. 1 is a cross-sectional view illustrating a schematic configuration of a coated active material of a first embodiment. The coated active material 110 includes a positive electrode active material 101 and a coating layer 104. A shape of the coated active material 110 is, for example, a particle shape. The coating layer 104 coats at least a portion of a surface of the positive electrode active material 101. The coating layer 104 may coat only a portion of the surface of the positive electrode active material 101 or uniformly coat the surface of the positive electrode active material 101. The coating layer 104 includes a first coating layer 102 and a second coating layer 103. The first coating layer 102 is located outside of the second coating layer 103. A percentage of change in specific surface area from a specific surface area of the positive electrode active material 101 coated with the second coating layer 103 to a specific surface area of the coated active material 110 is greater than or equal to -62.8% and less than or equal to +3.79%. The coating layer 104 inhibits direct contact between the positive electrode active material 101 and a solid electrolyte in an electrode of a battery, thereby inhibiting a side reaction of the solid electrolyte. As a result, the battery can have reduced interfacial resistance. Herein, the "percentage of change in specific surface area from a specific surface area of the positive electrode active material 101 coated with the second coating layer 103 to a specific surface area of the coated active material 110" is, for example, a percentage of change in specific surface area from a specific surface area of the positive electrode active material 101 coated only with the second coating layer 103 to a specific surface area of the coated active material 110. The expression "coated only with the second coating layer 103" refers to a state in which the positive electrode active material 101 is coated with the second coating layer 103, and the first coating layer 102 is not present thereon. Furthermore, in instances where the percentage of change in specific surface area is 0%, an uncoated positive electrode active material 101 is not included. Herein, the "uncoated positive electrode active material 101" is a positive electrode active material 101 not coated with the coating layer 104.

Having a value of the percentage of change in specific surface area that is within the above-mentioned range means that the positive electrode active material 101 having the second coating layer 103 is uniformly coated with the first coating layer 102. In terms of reducing the interfacial resistance of a battery, it is advantageous to have a uniform coating with little unevenness. The percentage of change in specific surface area may be greater than or equal to -56.6% and less than or equal to 0%. When the percentage of change in specific surface area is within such a range, the effect of inhibiting the interfacial resistance of a battery is further enhanced. Note that the percentage of change in specific surface area may be less than 0%.

The percentage of change in specific surface area may be greater than or equal to - 56.6% and less than or equal to 0% or greater than or equal to -24.0% and less than or equal to -13.0%. When the percentage of change in specific surface area is within such a range, the effect of inhibiting the interfacial resistance of a battery is further enhanced. The percentage of change in specific surface area may be greater than or equal to -56.6% and less than or equal to -18.8%.

The percentage of change in specific surface area can be calculated based on a specific surface area of the positive electrode active material 101 having the second coating layer 103. Specifically, the specific surface area of the positive electrode active material 101 having the second coating layer 103 is designated as $S_0$. The specific surface area of the coated active material 110 is designated as S. The percentage of change in specific surface area can be determined according to Equation (i), shown below. Negative values of the percentage of change mean reductions in the specific surface area. Positive values of the percentage of change mean increases in the specific surface area.

$$\text{Percentage of change in specific surface area} = 100 \times (S - S_0)/S_0 \text{ (unit: \%)} \quad (i)$$

In this specification, the specific surface area of the coated active material 110 is a specific surface area of particles of the coated active material 110. Likewise, the specific surface area of the positive electrode active material 101 coated with the second coating layer 103 is a specific surface area of particles of the positive electrode active material 101 coated with the second coating layer 103.

The specific surface area can be measured in the following manner. First, an adsorption isotherm is measured with a gas adsorption analyzer. The specific surface area (unit: $m^2/g$) is calculated from the adsorption isotherm with a Brunauer-Emmett-Teller (BET) analysis method.

The specific surface area of the positive electrode active material 101 coated with the second coating layer 103 can be measured by selectively removing the first coating layer 102 from the coated active material 110 by using an inorganic or organic solvent. For example, when a first solid electrolyte, which is included in the first coating layer 102, is a solid electrolyte containing a halogen, the first coating layer 102 can be selectively removed by washing the coated active material 110 with a solvent such as water or ethanol.

<Positive Electrode Active Material>

The positive electrode active material 101 includes a material that has a property of occluding and releasing metal ions (e.g., lithium ions). Examples of the positive electrode active material 101 include lithium transition metal oxides, transition metal fluorides, polyanionic materials, fluorinated polyanionic materials, transition metal sulfides, transition metal oxysulfides, and transition metal oxynitrides. In particular, in instances where a lithium transition metal oxide is used as the positive electrode active material 101, the cost of production of a battery can be reduced, and an average discharge voltage of the battery can be increased. Examples of the lithium transition metal oxides include $Li(Ni,Co,Al)O_2$, $Li(Ni,Co,Mn)O_2$, and $LiCoO_2$.

The positive electrode active material 101 has a shape of particles, for example. The shape of the particles of the positive electrode active material 101 is not particularly limited. The shape of the particles of the positive electrode active material 101 may be a spherical shape, an ellipsoidal shape, a flake shape, or a fiber shape.

<First Coating Layer>

The first coating layer 102 is a layer containing the first solid electrolyte. The first solid electrolyte in the first coating layer 102 contains Li, M, and X. M is at least one selected from the group consisting of metalloid elements and metal elements other than Li. X is at least one selected from the group consisting of F, Cl, Br, and I. Such materials have excellent ionic conductivity and oxidation resistance. Accordingly, the coated active material 110, which includes the first coating layer 102 that includes the first solid electrolyte, reduces the interfacial resistance of a battery and improves charge-discharge efficiency of the battery.

The "metalloid elements" include B, Si, Ge, As, Sb, and Te.

The "metal elements" include all the elements other than hydrogen from Groups 1 to 12 of the periodic table and all the elements other than B, Si, Ge, As, Sb, Te, C, N, P, O, S, or Se from Groups 13 to 16 of the periodic table. That is, the metal elements are elements that can become a cation in instances in which any of the elements forms an inorganic compound with a halogen compound.

The first solid electrolyte is a solid electrolyte containing a halogen, that is, a so-called halide solid electrolyte. Halide solid electrolytes have excellent oxidation resistance. Accordingly, coating the positive electrode active material 101 with the first solid electrolyte can inhibit the oxidation of other materials present in a positive electrode, such as a solid electrolyte. Consequently, a battery that uses the coated active material 110 can have reduced interfacial resistance.

The first solid electrolyte has an ionic conductivity. Typically, the ionic conductivity is a lithium ion conductivity. The first coating layer 102 may contain the first solid electrolyte as a major component or may contain only the first solid electrolyte. The term "major component" refers to a component that is present in the largest amount in terms of a mass ratio. The expression "contain only the first solid electrolyte" means that no intentionally added materials other than the first solid electrolyte are present while incidental impurities may be present. Examples of the incidental impurities include raw materials for the first solid electrolyte and by-products that are formed during the preparation of the first solid electrolyte. A ratio of a mass of the incidental impurities to a total mass of the first coating layer 102 may be less than or equal to 5%, less than or equal to 3%, less than or equal to 1%, or less than or equal to 0.5%.

The halide solid electrolyte that serves as the first solid electrolyte is, for example, represented by Formula 1, shown below. In Formula 1, $\alpha$, $\beta$, and $\gamma$ are each independently a value greater than 0. $\gamma$ may be 4 to 6.

$$Li_\alpha M_\beta X_\gamma \qquad (1)$$

Halide solid electrolytes represented by Formula 1 have higher ionic conductivity than halide solid electrolytes formed only of Li and a halogen element, such as LiI. Accordingly, in instances where a halide solid electrolyte represented by Formula 1 is used in a battery, the charge-discharge efficiency of the battery can be improved.

M may include Y (=yttrium). That is, the metal element that is included in the halide solid electrolyte may be Y. In instances where M includes Y, the halide solid electrolyte exhibits high ionic conductivity.

The halide solid electrolyte containing Y is, for example, represented by Formula 2, shown below.

$$Li_a Me_b Y_c X_6 \qquad (2)$$

In Formula 2, a + mb + 3c = 6 and c > 0 are satisfied. In Formula 2, Me includes at least one selected from the group consisting of metalloid elements and metal elements other than Li or Y. m is a valence of Me. In instances where Me includes multiple elements, mb is equal to the sum of the products of each of the ratios of the respective elements multiplied by the respective valences of the elements. For example, when Me includes an element Me1 and an element Me2, the ratio of the element Me1 is b1, the valence of the element Me1 is m1, the ratio of the element Me2 is b2, and the valence of the element Me2 is m2, mb = m1b1 + m2b2 holds. In Formula 2, X is at least one selected from the group consisting of F, Cl, Br, and I.

Me may be at least one selected from the group consisting of Mg, Ca, Sr, Ba, Zn, Sc, Al, Ga, Bi, Zr, Hf, Ti, Sn, Ta, Gd, and Nb.

The halide solid electrolyte may be any of the following materials. The following halide solid electrolytes exhibit high ionic conductivity. Accordingly, the ionic conductivity of a positive electrode material 10 is improved. Consequently, the charge-discharge efficiency of a battery that uses the positive electrode material 10 is improved.

The halide solid electrolyte may be a material represented by Formula Al, shown below. In Formula A1, X is at least one selected from the group consisting of Cl, Br, and I. In Formula A1, 0 < d < 2 is satisfied.

$$Li_{6-3d}Y_dX_6 \qquad (A1)$$

The halide solid electrolyte may be a material represented by Formula A2, shown below. In Formula A2, X is at least one selected from the group consisting of Cl, Br, and I.

$$Li_3YX_6 \qquad (A2)$$

The halide solid electrolyte may be a material represented by Formula A3, shown below. In Formula A3, $0 < \delta \leq 0.15$ is satisfied.

$$Li_{3-3\delta}Y_{1+\delta}Cl_6 \qquad (A3)$$

The halide solid electrolyte may be a material represented by Formula A4, shown below. In Formula A4, $0 < \delta \leq 0.25$ is satisfied.

$$Li_{3-3\delta}Y_{1+\delta}Br_6 \qquad (A4)$$

The halide solid electrolyte may be a material represented by Formula A5, shown below. In Formula A5, Me is at least one selected from the group consisting of Mg, Ca, Sr, Ba, and Zn. In Formula A5, $-1 < \delta < 2$, $0 < a < 3$, $0 < (3 - 3\delta + a)$, $0 < (1 + \delta - a)$, $0 \leq x \leq 6$, $0 \leq y \leq 6$, and $(x + y) \leq 6$ are satisfied.

$$Li_{3-3\delta+a}Y_{1+\delta-a}Me_aCl_{6-x-y}Br_xI_y \qquad (A5)$$

The halide solid electrolyte may be a material represented by Formula A6, shown below. In Formula A6, Me is at least one selected from the group consisting of Al, Sc, Ga, and Bi. In Formula A6, $-1 < \delta < 1$, $0 < a < 2$, $0 < (1 + \delta - a)$, $0 \leq x \leq 6$, $0 \leq y \leq 6$, and $(x + y) \leq 6$ are satisfied.

$$Li_{3-3\delta}Y_{1+\delta-a}Me_aCl_{6-x-y}Br_xI_y \qquad (A6)$$

The halide solid electrolyte may be a material represented by Formula A7, shown below. In Formula A7, Me is at least one selected from the group consisting of Zr, Hf, and Ti. In Formula A7, $-1 < \delta < 1$, $0 < a < 1.5$, $0 < (3 - 3\delta - a)$, $0 < (1 + \delta - a)$, $0 < x < 6$, $0 < y \leq 6$, and $(x + y) \leq 6$ are satisfied.

$$Li_{3-3\delta-a}Y_{1+\delta-a}Me_aCl_{6-x-y}Br_xI_y \qquad (A7)$$

The halide solid electrolyte may be a material represented by Formula A8, shown below. In Formula A8, Me is at least one selected from the group consisting of Ta and Nb. In Formula A8, $-1 < \delta < 1$, $0 < a < 1.2$, $0 < (3 - 3\delta - 2a)$, $0 < (1 + \delta - a)$, $0 \leq x \leq 6$, $0 \leq y \leq 6$, and $(x + y) \leq 6$ are satisfied.

$$Li_{3-3\delta-2a}Y_{1+\delta-a}Me_aCl_{6-x-y}Br_xI_y \qquad (A8)$$

Specific examples of the halide solid electrolyte include $Li_3YX_6$, $Li_2MgX_4$, $Li_2FeX_4$, $Li(Al,Ga,In)X_4$, and

$Li_3(Al,Ga,In)X_6$. In these formulae, X is at least one selected from the group consisting of F, Cl, Br, and I.

In the present disclosure, regarding the elements in formulae, expressions such as "(Al,Ga,In)" mean at least one element selected from the group of the elements in the parenthesis. That is, "(Al,Ga,In)" has the same meaning as "at least one selected from the group consisting of Al, Ga, and In". The same applies to other elements.

Examples of representative compositions of $Li_3YX_6$ include $Li_3YBr_2Cl_4$. The halide solid electrolyte may be $Li_3YBr_2Cl_4$.

The halide solid electrolyte may be $Li_{2.7}Y_{1.1}Cl_6$, $Li_3YBr_6$, or $Li_{2.5}Y_{0.5}Zr_{0.5}Cl_6$.

The halide solid electrolyte may be a sulfur-free solid electrolyte. In this instance, the formation of a sulfur-containing gas, such as a hydrogen sulfide gas, from the solid electrolyte can be avoided. The "sulfur-free solid electrolyte" is a solid electrolyte that is represented by a formula that does not include the sulfur element. Accordingly, solid electrolytes containing a very small amount of sulfur, for example, solid electrolytes having a sulfur content of less than or equal to 0.1 mass%, are classified into the "sulfur-free solid electrolyte". The halide solid electrolyte may contain an additional anion, in addition to the anion of the halogen element. The additional anion may be that of oxygen.

A shape of the halide solid electrolyte is not particularly limited and may be, for example, a needle shape, a spherical shape, an ellipsoidal shape, or the like. For example, the shape of the halide solid electrolyte may be a particle shape.

The halide solid electrolyte can be produced in the following manner. An example of a method for producing the halide solid electrolyte represented by Formula 1 is described below.

Raw material powders of halides are provided in accordance with a desired composition. The halides may each be a compound of two elements including a halogen element. For example, in instances where $Li_3YCl_6$ is to be prepared, raw material powders of LiCl and $YCl_3$ are to be provided in a molar ratio of 3:1. In this instance, the elemental species of M and X in Formula 1 can be determined by appropriate selection of the types of the raw material powders. The values of $\alpha$, $\beta$, and $\gamma$ in Formula 1 can be adjusted by adjusting the types of the raw material powders, a compounding ratio between the raw material powders, and a synthesis process.

The raw material powders are mixed and ground together, and subsequently, the raw material powders are reacted with each other with a mechanochemical milling method. Alternatively, after the raw material powders are mixed and ground together, the raw material powders may be heat-treated in a vacuum or an inert atmosphere. The heat treatment is performed, for example, under the conditions of 100°C to 550°C and 1 hour or more. By performing these steps, the halide solid electrolyte can be prepared.

The constitution of the crystalline phase (i.e., crystal structure) of the halide solid electrolyte can be adjusted and determined by the method with which the raw material powders are reacted with each other and the conditions for the reaction.

<Second Coating Layer>

The second coating layer 104 is a layer containing a base material. The second coating layer 103 is located between the first coating layer 102 and the positive electrode active material 101. In the coated active material 110, the second coating layer 103 is in direct contact with the positive electrode active material 101. The base material that is included in the second coating layer 103 may be a material having low electron conductivity, such as an oxide material or an oxide solid electrolyte.

Examples of the oxide material include $SiO_2$, $Al_2O_3$, $TiO_2$, $B_2O_3$, $Nb_2O_5$, $WO_3$, and $ZrO_2$. Examples of the oxide solid electrolyte include Li-Nb-O compounds, such as $LiNbO_3$; Li-B-O compounds, such as $LiBO_2$ and $Li_3BO_3$; Li-Al-O compounds, such as $LiAlO_2$; Li-Si-O compounds, such as $Li_4SiO_4$; $Li_2SO_4$; Li-Ti-O compounds, such as $Li_4Ti_5O_{12}$; Li-Zr-O compounds, such as $Li_2ZrO_3$; Li-Mo-O compounds, such as $Li_2MoO_3$; Li-V-O compounds, such as $LiV_2O_5$; and Li-W-O compounds, such as $Li_2WO_4$. The base material may be one of these or a mixture of two or more of these.

The base material may be a lithium-containing oxide. Lithium-containing oxides have excellent high-potential stability. In the instance where a lithium-containing oxide is used as the base material, the charge-discharge efficiency of a battery can be improved.

The base material may be a solid electrolyte having lithium ion conductivity. Typically, the base material is an oxide solid electrolyte having lithium ion conductivity. Oxide solid electrolytes have high ionic conductivity and excellent high-potential stability. In the instance where an oxide solid electrolyte is used as the base material, the charge-discharge efficiency of a battery can be improved.

The base material may be a material containing Nb. Typically, the base material includes lithium niobate (LiNbOs). With this configuration, the charge-discharge efficiency of a battery can be improved. The oxide solid electrolyte that serves as the base material may be any of the materials described above.

In one example, the ionic conductivity of the halide solid electrolyte present in the first coating layer 102 is higher than the ionic conductivity of the base material present in the second coating layer 103. With this configuration, oxidation of other materials used in a positive electrode of a battery can be further inhibited without compromising the ionic conductivity.

The first coating layer 102 has a thickness of, for example, greater than or equal to 1 nm and less than or equal to 500 nm. The second coating layer 103 has a thickness of, for example, greater than or equal to 1 nm and less than or equal to 100 nm. In the instance where the thicknesses of the first coating layer 102 and the second coating layer 103 are appropriately adjusted, contact between the positive electrode active material 101 and a second solid electrolyte can be sufficiently inhibited. The thickness of each of the layers can be determined as follows: a thin specimen is prepared from the coated active material 110 with a method such as ion milling, and a cross section of the coated active material 110 is examined with a transmission electron microscope. Thicknesses are measured at several random positions (e.g., five points), and an average of the thicknesses can be taken as the thickness of each of the layers.

<Method for Producing Coated Active Material>

The coated active material 110 can be produced in the following manner.

First, the second coating layer 103 is formed on the surface of the positive electrode active material 101. Methods for forming the second coating layer 103 are not particularly limited. Examples of the methods for forming the second coating layer 103 include liquid-phase coating methods and vapor-phase coating methods.

For example, a liquid-phase coating method is as follows. A precursor solution for the base material is applied to the surface of the positive electrode active material 101. In instances where a second coating layer 103 containing $LiNbO_3$ is to be formed, the precursor solution may be a mixed solution (sol solution) of a solvent, a lithium alkoxide, and a niobium alkoxide. Examples of the lithium alkoxide include lithium ethoxide. Examples of the niobium alkoxide include niobium ethoxide. Examples of the solvent include alcohols, such as ethanol. Amounts of the lithium alkoxide and the niobium alkoxide are to be adjusted in accordance with a target composition of the second coating layer 103. If necessary, water may be added to the precursor solution. The precursor solution may be acidic or alkaline.

Methods for applying the precursor solution to the surface of the positive electrode active material 101 are not particularly limited. For example, the precursor solution can be applied to the surface of the positive electrode active material 101 in a tumbling fluidized bed granulating-coating machine. The tumbling fluidized bed granulating-coating machine can apply the precursor solution to the surface of the positive electrode active material 101 by spraying the precursor solution onto the positive electrode active material 101 while tumbling and fluidizing the positive electrode active material 101. Accordingly, a precursor coating is formed on the surface of the positive electrode active material 101. Subsequently, the positive electrode active material 101 coated with the precursor coating is heat-treated. The heat treatment causes the gelation of the precursor coating to proceed, which leads to the formation of the second coating layer 103.

Examples of the vapor-phase coating methods include pulsed laser deposition (PLD) methods, vacuum vapor deposition methods, sputtering methods, thermal chemical vapor deposition (CVD) methods, and plasma chemical vapor deposition methods. The PLD methods are carried out, for example, as follows. A high-energy pulsed laser (e.g., a KrF excimer laser, wavelength: 248 nm) is applied onto an ion-conducting material used as a target, to cause the sublimed ion-conducting material to be deposited onto the surface of the positive electrode active material 101. In instances where a second coating layer 103 of $LiNbO_3$ is to be formed, the target to be used is densely sintered $LiNbO_3$.

Note that the method for forming the second coating layer 103 is not limited to the methods mentioned above. The second coating layer 103 may be formed with any of a variety of methods, such as a spray method, a spray-dry coating method, an electrodeposition method, a dipping method, and a mechanical mixing method that uses a dispersing machine.

After the second coating layer 103 has been formed, the first coating layer 102 is formed in the following manner.

A mixture is prepared by mixing a powder of the positive electrode active material 101 having the second coating layer 103 with a powder of the first solid electrolyte in an appropriate ratio. The mixture is subjected to a milling process, in which mechanical energy is applied to the mixture. The milling process can be carried out with a mixer, such as a ball mill. The milling process may be performed in a dry and inert atmosphere so that oxidation of the materials can be inhibited.

The coated active material 110 may be produced with a dry particle-composing method. A process that uses the dry particle-composing method includes applying at least one type of mechanical energy selected from the group consisting of impact, compression, and shear to the positive electrode active material 101 and the first solid electrolyte. The ratio at which the positive electrode active material 101 having the second coating layer 103 is mixed with the first solid electrolyte is to be appropriate.

A machine that is used in the production of the coated active material 110 is not particularly limited and may be a machine that can apply mechanical energy of impact, compression, and shear to the mixture containing the positive electrode active material 101 having the second coating layer 103 and containing the first solid electrolyte. The machine that can apply mechanical energy may be a compression-shear processing machine (particle-composing machine), such as a ball mill, Mechanofusion (manufactured by Hosokawa Micron Corporation), or Nobilta (manufactured by Hosokawa Micron Corporation).

Mechanofusion is a particle-composing machine that uses a dry mechanical composing technique, which involves applying high mechanical energy to several different raw material powders. In Mechanofusion, raw material powders loaded between a rotating vessel and a press head are subjected to mechanical energy of compression, shear, and friction. Accordingly, the particles form a composite.

Nobilta is a particle-composing machine that uses a dry mechanical composing technique that has evolved from a particle-composing technique, to carry out the composing of nanoparticles used as a raw material. Nobilta produces composite particles by applying mechanical energy of impact, compression, and shear to several types of raw material powders.

Nobilta includes a horizontal cylindrical mixing vessel, in which a rotor is positioned with a predetermined gap between the rotor and an inner wall of the mixing vessel; with high-speed rotation of the rotor, the raw material powders are forcibly passed through the gap, and this process is repeated multiple times. Accordingly, a force of impact, compression, and shear acts on the mixture, and, consequently, composite particles formed of the positive electrode active material 101 having the second coating layer 103 and of the first solid electrolyte can be produced. Conditions, such as a rotation speed of the rotor, a process time, and amounts of charge, can be adjusted to control the thickness of the first coating layer 102, a coverage of the first solid electrolyte on the positive electrode active material 101, the specific surface area of the coated active material 110, and the like.

Note that the process using any of the above-mentioned machines is not essential. The coated active material 110 may be produced by mixing the positive electrode active material 101 having the second coating layer 103 with the first solid electrolyte in a mortar, a mixer, or the like. The first solid electrolyte may be deposited onto the surface of the positive electrode active material 101 having the second coating layer 103, by using any of a variety of methods, such as a spray method, a spray-dry coating method, an electrodeposition method, a dipping method, and a mechanical mixing method that uses a dispersing machine.

(Second Embodiment)

Fig. 2 is a cross-sectional view illustrating a schematic configuration of a positive electrode material of a second embodiment. A positive electrode material 10 includes the coated active material 110 and the second solid electrolyte 105. The second solid electrolyte 105 is in indirect contact with the positive electrode active material 101 with the coating layer 104 disposed between the second solid electrolyte 105 and the positive electrode active material 101. The coated active material 110 has the configuration described above in the first embodiment. The positive electrode material 10 can reduce the interfacial resistance of a battery.

In the positive electrode material 10, the second solid electrolyte 105 and the coated active material 110 may be in contact with each other. In this case, the first solid electrolyte and the second solid electrolyte 105 are in contact with each other. The positive electrode material 10 may include multiple particles of second solid electrolyte 105 and multiple particles of coated active material 110.

In the positive electrode material 10, a ratio "v 1: 100 - v1", which is a ratio between a volume of the positive electrode active material 101 and a volume of the solid electrolytes, may satisfy $30 \leq v1 \leq 95$. When $30 \leq v1$ is satisfied, a sufficient energy density of a battery is ensured. When $v1 \leq 95$ is satisfied, a high-power operation of a battery can be achieved. The volume of the solid electrolytes is a total volume of the first solid electrolyte and the second solid electrolyte 105.

The volume ratio can be calculated from amounts of charge of the materials or can be calculated in the following manner. Specifically, a cross section of a positive electrode that uses the positive electrode material 10 is examined with a scanning electron microscope (SEM-EDX), and two-dimensional elemental mapping images are acquired. Measurement conditions for the scanning electron microscope used to acquire two-dimensional mapping images include, for example, a magnification of $1000\times$ to $3000\times$ and an acceleration voltage of 5 kV. The two-dimensional mapping images are acquired at a resolution of $1280\times960$. The volume of the positive electrode active material 101, the volume of the first solid electrolyte, and the volume of the second solid electrolyte 105 can be determined by analyzing the two-dimensional elemental mapping images and using the number of pixels corresponding to the elements present in the positive electrode active material 101, the first coating layer 102, and the second solid electrolyte 105.

The coated active material 110 may have a median diameter of greater than or equal to 0.1 $\mu$m and less than or equal to 100 $\mu$m. When the median diameter of the coated active material 110 is greater than or equal to 0.1 $\mu$m, the coated active material 110 and the second solid electrolyte 105 can form a favorable state of dispersion in the positive electrode material 10. As a result, charge-discharge characteristics of a battery are improved. When the median diameter of the coated active material 110 is less than or equal to 100 $\mu$m, a sufficient lithium diffusion rate is ensured in the coated active material 110. Consequently, a high-power operation of a battery can be achieved. Desirably, the median diameter of the coated active material 110 may be greater than or equal to 2 $\mu$m and less than or equal to 8 $\mu$m.

The median diameter of the coated active material 110 may be greater than the median diameter of the second solid electrolyte 105. In this case, the coated active material 110 and the second solid electrolyte 105 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

<Second Solid Electrolyte>

The second solid electrolyte 105 may include at least one selected from the group consisting of a halide solid electrolyte, a sulfide solid electrolyte, an oxide solid electrolyte, a polymeric solid electrolyte, and a complex hydride solid electrolyte.

Examples of the halide solid electrolytes include the above-described materials of the first solid electrolyte. That is, the second solid electrolyte 105 may have a composition that is the same as or different from that of the first solid electrolyte.

Oxide solid electrolytes are solid electrolytes containing oxygen. The oxide solid electrolyte may contain an additional anion, in addition to the oxygen anion. The additional anion may be an anion other than that of sulfur or those of halogen elements.

Examples of the oxide solid electrolyte include NASICON-type solid electrolytes, typified by $LiTi_2(PO_4)_3$ and element-substituted derivatives thereof; $(LaLi)TiO_3$-system perovskite-type solid electrolytes; LISICON-type solid electrolytes, typified by $Li_{14}ZnGe_4O_{16}$, $Li_4SiO_4$, $LiGeO_4$, and element-substituted derivatives thereof; garnet-type solid electrolytes, typified by $Li_7La_3Zr_2O_{12}$ and element-substituted derivatives thereof; $Li_3PO_4$ and N-substituted derivatives thereof; and glass or glass-ceramics including a Li-B-O compound-containing base material and one or more additional materials, in which examples of the Li-B-O compound include $LiBO_2$ and $Li_3BO_3$, and examples of the additional materials include $Li_2SO_4$ and $Li_2CO_3$.

Examples of the polymeric solid electrolyte include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone, or a mixture of two or more lithium salts selected from these may be used.

Examples of the complex hydride solid electrolyte include $LiBH_4$-$LiI$ and $LiBH_4$-$P_2S_5$.

The second solid electrolyte 105 may contain Li and S. In other words, the second solid electrolyte 105 may contain a sulfide solid electrolyte. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte 105 that is included in a battery is a sulfide solid electrolyte, the technology of the present disclosure can be used to produce a superior effect.

Examples of the sulfide solid electrolyte include $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, and $Li_{10}GeP_2S_{12}$. To any of these, LiX, $Li_2O$, $MO_q$, $Li_pMO_q$, and/or the like may be added. In the LiX, X is at least one selected from the group consisting of F, Cl, Br, and I. In the $MO_q$ and $Li_pMO_q$, the element M is at least one selected from the group consisting of P, Si, Ge, B, Al, Ga, In, Fe, and Zn. In the $MO_q$ and $Li_pMO_q$, p and q are each independently a natural number.

The second solid electrolyte 105 may include two or more of the above-mentioned materials of solid electrolytes. For example, the second solid electrolyte 105 may include a halide solid electrolyte and a sulfide solid electrolyte.

The second solid electrolyte 105 may have a lithium ion conductivity higher than the lithium ion conductivity of the first solid electrolyte.

The second solid electrolyte 105 may contain incidental impurities, such as starting materials used in the synthesis of the solid electrolyte, by-products, and decomposition products. The same applies to the first solid electrolyte.

<Other Materials>

A binding agent may be included in the positive electrode material 10 to improve adhesion between particles. The binding agent is used to improve the binding properties of the materials that form the positive electrode. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polycarbonates, polyether sulfones, polyetherketones, polyetheretherketones, polyphenylene sulfides, hexafluoropolypropylene, styrene butadiene rubber, carboxymethyl cellulose, and ethyl cellulose. The binding agent may be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid esters, acrylic acids, and hexadiene. One of those mentioned may be used alone, or two or more of those mentioned may be used in combination.

The binding agent may be an elastomer because elastomers have excellent binding properties. Elastomers are polymers having rubber elasticity. The elastomer for use as a binding agent may be a thermoplastic elastomer or a thermosetting elastomer. The binding agent may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubbers (BR), isoprene rubbers (IR), chloroprene rubbers (CR), acrylonitrile-butadiene rubbers (NBR), styrene-butylene rubbers (SBR), styrene-butadiene-styrene (SBS), styrene-isoprene-styrene (SIS), hydrogenated isoprene rubbers (HIR), hydrogenated butyl rubbers (HIIR), hydrogenated nitrile rubbers (HNBR), hydrogenated styrene-butylene rubber (HSBR), polyvinylidene fluoride (PVdF), and polytetrafluoroethylene (PTFE). One of these may be used alone, or two or more of these may be used in combination.

A conductive additive may be included in the coating layer 104 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, cost reduction can be achieved.

Any of the above-mentioned conductive additives may be included in the positive electrode material 10 to enhance electron conductivity.

<Method for Producing Positive Electrode Material>

The positive electrode material 10 can be prepared by mixing the coated active material 110 with the second solid electrolyte 105. Methods for mixing the coated active material 110 with the second solid electrolyte 105 are not particularly limited. The coated active material 110 may be mixed with the second solid electrolyte 105 in a device, such as a mortar, or the coated active material 110 may be mixed with the second solid electrolyte 105 in a mixer, such as a ball mill.

(Third Embodiment)

Fig. 3 is a cross-sectional view illustrating a schematic configuration of a battery of a third embodiment. A battery 200 includes a positive electrode 201, a separator layer 202, and a negative electrode 203. The separator layer 202 is disposed between the positive electrode 201 and the negative electrode 203. The positive electrode 201 includes the positive electrode material 10 described in the second embodiment. With this configuration, the battery 200 can have reduced interfacial resistance.

The positive electrode 201 and the negative electrode 203 may each have a thickness of greater than or equal to 10 $\mu$m and less than or equal to 500 $\mu$m. When the thicknesses of the positive electrode 201 and the negative electrode 203 are greater than or equal to 10 $\mu$m, a sufficient energy density of the battery can be ensured. When the thicknesses of the positive electrode 201 and the negative electrode 203 are less than or equal to 500 $\mu$m, a high-power operation of the battery 200 can be achieved.

The separator layer 202 is a layer containing an electrolyte material. The separator layer 202 may include at least one solid electrolyte selected from the group consisting of a sulfide solid electrolyte, an oxide solid electrolyte, a halide solid electrolyte, a polymeric solid electrolyte, and a complex hydride solid electrolyte. Details of the solid electrolytes are as described in the first embodiment.

The negative electrode 203 includes a negative electrode active material that is a material having a property of occluding and releasing metal ions (e.g., lithium ions).

Examples of the negative electrode active material include metal materials, carbon materials, oxides, nitrides, tin compounds, and silicon compounds. The metal materials may be elemental metals. The metal materials may be alloys. Examples of the metal materials include lithium metals and lithium alloys. Examples of the carbon materials include natural graphite, coke, partially graphitized carbon, carbon fibers, spherical carbon, artificial graphite, and amorphous carbon. Silicon (Si), tin (Sn), a silicon compound, a tin compound, or the like may be used; these are suitable from the standpoint of a capacity density.

Particles of the negative electrode active material may have a median diameter of greater than or equal to 0.1 $\mu$m and less than or equal to 100 $\mu$m.

The negative electrode 203 may include one or more additional materials, such as a solid electrolyte. The solid electrolyte may be any of the materials described in the first embodiment.

EXAMPLES

Details of the present disclosure will now be described with reference to Examples and a Comparative Example. Note that electrodes and batteries of the present disclosure are not limited to the Examples described below.

<Example 1>

[Preparation of First Solid Electrolyte]

In an argon glove box with a dew point of -60°C or less, raw material powders of $YCl_3$, LiCl, and LiBr were weighed such that a molar ratio of $YCl_3$:LiCl:LiBr = 1: 1:2 was achieved. These were ground and mixed in an agate mortar to form a mixture. The mixture was heat-treated in an electric furnace under the conditions of 2 hours and 520°C. In this manner, $Li_3YBr_2Cl_4$ (hereinafter denoted as "LYBC") that was a halide solid electrolyte was prepared. p-Chlorotoluene was added to the LYBC, and the LYBC was then ground in a wet grinding and dispersing machine and subsequently dried. In this manner, a powder of LYBC (median diameter D50 = 0.4 $\mu$m) was prepared to be used as the first solid electrolyte.

[Preparation of Coated Active Material]

In an argon glove box, 5.95 g of lithium ethoxide (manufactured by Koujundo Chemical Laboratory Co., Ltd.) and 36.43 g of niobium pentaethoxide (manufactured by Koujundo Chemical Laboratory Co., Ltd.) were dissolved in 500 mL of super-dehydrated ethanol (manufactured by FUJIFILM Wako Pure Chemical Corporation) to form a coating solution.

A powder of $Li(Ni,Co,Al)O_2$ (hereinafter denoted as "NCA") was prepared to be used as the positive electrode active material. The process of forming a coating layer of $LiNbO_3$ on a surface of the NCA was performed with a tumbling fluidized bed granulating-coating machine (FD-MP-01E, manufactured by Powrex Corporation). The amount of NCA charged was 1 kg, a stirring speed was 400 rpm, and a pumping rate for the coating solution was 6.59 g/minute. The amount of the coating solution to be charged was adjusted such that the thickness of $LiNbO_3$ could be 10 nm. The amount of the coating solution to be charged was calculated from a specific surface area of the active material and a density of the $LiNbO_3$. The series of steps in the tumbling fluidized bed granulating-coating machine were carried out in a dry atmosphere having a dew point of -30°C or less. After the process of forming a coating layer of $LiNbO_3$ was completed, the resulting powder was placed into an alumina crucible and heat-treated under the conditions of an air atmosphere, 300°C, and 1 hour. The heat-treated powders were reground in an agate mortar. In this manner, NCA having a coating layer of $LiNbO_3$ was prepared. The coating layer was made of lithium niobate ($LiNbO_3$). The NCA having a coating layer of $LiNbO_3$ is hereinafter denoted as "Nb-NCA".

Next, a first coating layer made of the LYBC was formed on a surface of the Nb-NCA. The first coating layer was formed with a compression-shear process in a particle composing machine (NOB-MINI, manufactured by Hosokawa Micron Corporation). Specifically, the Nb-NCA and the LYBC were weighed such that a volume ratio of Nb-NCA to LYBC of 90: 10 was achieved, and the process was carried out under the conditions of a blade clearance of 2 mm, a rotational speed of 2800 rpm, and a process time of 60 min. In this manner, a coated active material of Example 1 was prepared.

[Measurement of Specific Surface Area]

The specific surface area of the coated active material was measured under the following conditions. 3 g of the coated active material was added to a measurement test tube, and the measurement test tube was connected to a surface area and pore size distribution analyzer (Belsorp Max, manufactured by MicrotracBEL Corp.). A pretreatment was performed under the conditions of 80°C, a vacuum, and 1 hour. Subsequently, a nitrogen gas adsorption test was conducted under the conditions of an adsorption temperature of 77 K and an adsorption relative pressure upper limit of 0.99 (P/P0). A BET analysis of an adsorption isotherm was performed for a linear region with analysis software Belmaster 7, and, accordingly, the specific surface area was calculated.

The specific surface area of the coated active material of Example 1 was 0.849 $m^2$/g. The specific surface area of the Nb-NCA was also measured in the same manner. The specific surface area of the Nb-NCA was 0.818 $m^2$/g. In Example 1, the percentage of change in specific surface area was +3.79%, as determined according to Equation (i), described above.

<Example 2>

A coated active material of Example 2 was prepared in the same manner as in Example 1, except that the rotational speed of the particle composing machine was changed to 4000 rpm. The specific surface area of the coated active material of Example 2 was 0.664 m$^2$/g. In Example 2, the percentage of change in specific surface area was -18.8%, as determined according to Equation (i), described above.

<Example 3>

A coated active material of Example 3 was prepared in the same manner as in Example 1, except that the rotational speed of the particle composing machine was changed to 5500 rpm, and the process time was changed to 30 minutes. The specific surface area of the coated active material of Example 3 was 0.355 m$^2$/g. In Example 2, the percentage of change in specific surface area was -56.6%, as determined according to Equation (i), described above.

<Example 4>

A coated active material of Example 4 was prepared in the same manner as in Example 1, except that the rotational speed of the particle composing machine was changed to 7000 rpm, and the process time was changed to 20 minutes. The specific surface area of the coated active material of Example 4 was 0.304 m$^2$/g. In Example 4, the percentage of change in specific surface area was -62.8%, as determined according to Equation (i), described above.

<Comparative Example 1>

The Nb-NCA was provided as a coated active material of Comparative Example 1. The first coating layer was not formed.

[Preparation of Sulfide Solid Electrolyte]

In an argon glove box with a dew point of -60°C or less, raw material powders of $Li_2S$ and $P_2S_5$ were weighed such that a molar ratio of $Li_2S:P_2S_5$ = 75:25 was achieved. These were ground and mixed in an agate mortar to form a mixture. Subsequently, the mixture was subjected to a milling process in a planetary ball mill (P-7 model, manufactured by Fritsch) under the conditions of 10 hours and 510 rpm. In this manner, a glassy solid electrolyte was prepared. The glassy solid electrolyte was heat-treated in an inert atmosphere under the conditions of 270°C and 2 hours. In this manner, $Li_2S$-$P_2S_5$ (hereinafter denoted as "LPS") that was a glass-ceramic solid electrolyte was prepared.

[Preparation of Positive Electrode Material]

In an argon glove box, the coated active material of Example 1 and the LPS were weighed such that a volume ratio between the Nb-NCA and the solid electrolytes of 75:25 was achieved. These were mixed in an agate mortar to give a positive electrode material of Example 1. Regarding the volume ratio between the Nb-NCA and the solid electrolytes, the "solid electrolytes" means the total volume of the LYBC and the LPS.
Positive electrode materials of Examples 2 to 4 and Comparative Example 1 were prepared in the same manner as in Example 1.

[Preparation of Negative Electrode Material]

In an argon glove box, graphite and the LPS were weighed such that a volume ratio of graphite to LPS of 65:35 was achieved. These were mixed in an agate mortar to give a negative electrode material for use in both the Examples and the Comparative Example.

[Preparation of Battery]

The positive electrode material was weighed such that 14 mg of the Nb-NCA was present therein. In an insulating cylinder, the negative electrode material, the LPS, and the positive electrode material were stacked in the order stated. The resulting multilayer body was pressure-molded at a pressure of 720 MPa. In this manner, a multilayer body formed of a negative electrode, a solid electrolyte layer, and a positive electrode was prepared. Next, a stainless steel current collector was placed on upper and lower sides of the multilayer body. A current collector lead was attached to each of the current collectors. Next, the cylinder was sealed with an insulating ferrule to isolate the interior of the cylinder from the ambient environment. By performing these steps, batteries of the Examples and the Comparative Example were produced. The batteries were each constrained with four bolts from upper and lower sides to apply an interface pressure of 150 MPa to the batteries.

[Charge-Discharge Test]

The batteries were placed in a constant-temperature chamber at 25°C. The batteries were charged at a constant current of 147 μA, which was a current value corresponding to a 0.05 C rate (20 hour rate) with respect to a theoretical capacity of the batteries, until a voltage of 3.7 V was reached. After the current was interrupted, the batteries were held at an open circuit voltage for 30 minutes. Subsequently, a resistance was measured at 3.7 V with an AC impedance method. Next, the batteries were charged again at a 0.05 C rate to a voltage of 4.2 V, and after the current was interrupted, the batteries were held at an open circuit voltage for 30 minutes. Subsequently, the resistance was measured at 4.2 V with the AC impedance method. In a Nyquist plot obtained in the AC impedance measurement, the value between the real-axis intercepts on the highfrequency side and the low-frequency side was read as an interfacial resistance. A ratio of the value of the interfacial resistance at 4.2 V to the value of the interfacial resistance at 3.7 V was calculated as a percentage. The calculated value was used as a percentage of increase in interfacial resistance. The results are shown in Table 1.

[Table 1]

|  | Method used to form first coating layer | Specific surface area $(m^2/g)$ | Percentage of change in specific surface area (%) | Percentage of increase in interfacial resistance (%) |
|---|---|---|---|---|
| Example 1 | Nobilta (2800 rpm, 60 minutes) | 0.849 | +3.79 | 58 |
| Example 2 | Nobilta (4000 rpm, 60 minutes) | 0.664 | -18.8 | 49 |
| Example 3 | Nobilta (5500 rpm, 30 minutes) | 0.355 | -56.6 | 54 |
| Example 4 | Nobilta (7000 rpm, 20 minutes) | 0.304 | -62.8 | 63 |
| Comparative Example 1 | Not processed | 0.818 | - | 131 |

<Discussion>

As will be appreciated from the results of the Examples and the Comparative Example, the presence of the first coating layer significantly inhibited an increase in the interfacial resistance. As will be appreciated from a comparison between the result of Example 1 and the result of Example 2, uniformity of the formed first coating layer reduced the specific surface area, which led to inhibition of an increase in the interfacial resistance. As will be appreciated from the results of Examples 2 to 4, further reductions in the specific surface area adversely led to an increase in the interfacial resistance. Presumably, this is because, as indicated by the reductions in the specific surface area, a surface shape of the particles of the coated active material became similar to that of a sphere, and as a result, it became less likely that an interfacial bond was formed between the coated active material and the solid electrolyte in the positive electrode material.

The percentage of increase in interfacial resistance was lowest in Example 2. In Example 2, the percentage of change in specific surface area was 18.8%. Accordingly, it is reasonable to believe that a desirable range of the percentage of change in specific surface area is a range of values around 18.8%, which is, for example, a range of greater than or equal to -24.0% and less than or equal to -13.0%.

The positive electrode active material used in the examples had an average particle diameter of 5 μm. Considering the fact that the specific surface area of a sphere of 5 μm is 0.259 $m^2/g$, it is unlikely that the percentage of change in specific surface area becomes less than or equal to -68.3%.

Industrial Applicability

The technology of the present disclosure is useful, for example, in an all-solid-state lithium secondary battery.

Reference Signs List

| | |
|---|---|
| 10 | positive electrode material |
| 110 | coated active material |
| 101 | positive electrode active material |
| 102 | first coating layer |
| 103 | second coating layer |
| 104 | coating layer |
| 105 | second solid electrolyte |
| 200 | battery |
| 201 | positive electrode |
| 202 | separator layer |
| 203 | negative electrode |

**Claims**

1. A coated active material comprising:

   a positive electrode active material; and
   a coating layer coating at least a portion of a surface of the positive electrode active material, wherein
   the coating layer includes a first coating layer and a second coating layer,
   the first coating layer is located outside of the second coating layer, and
   a percentage of change in specific surface area from a specific surface area of the positive electrode active material coated with the second coating layer to a specific surface area of the coated active material is greater than or equal to -62.8% and less than or equal to +3.79%.

2. The coated active material according to claim 1, wherein the percentage of change is greater than or equal to -56.6% and less than or equal to 0%.

3. The coated active material according to claim 1, wherein the percentage of change is greater than or equal to -24.0% and less than or equal to -13.0%.

4. The coated active material according to any one of claims 1 to 3, wherein

   the first coating layer contains a first solid electrolyte, and
   the first solid electrolyte contains Li, M, and X, where M is at least one selected from the group consisting of metalloid elements and metal elements other than Li, and X is at least one selected from the group consisting of F, Cl, Br, and I.

5. The coated active material according to claim 4, wherein M includes yttrium.

6. The coated active material according to any one of claims 1 to 5, wherein

   the first coating layer contains a first solid electrolyte, and
   the first solid electrolyte is represented by Formula 1:

   $$\mathrm{Li}_{\alpha}\mathrm{M}_{\beta}\mathrm{X}_{\gamma} \qquad (1)$$

   where $\alpha$, $\beta$, and $\gamma$ are each independently a value greater than 0.

7. The coated active material according to any one of claims 1 to 6, wherein

   the second coating layer contains a base material, and
   the base material contains a lithium-containing oxide.

8. The coated active material according to any one of claims 1 to 7, wherein

the second coating layer contains a base material, and
the base material contains an oxide solid electrolyte having lithium ion conductivity.

9. The coated active material according to any one of claims 1 to 8, wherein

the second coating layer contains a base material, and
the base material contains lithium niobate.

10. A positive electrode material comprising:

the coated active material according to any one of claims 1 to 9; and
a second solid electrolyte.

11. The positive electrode material according to claim 10, wherein the second solid electrolyte contains Li and S.

12. A positive electrode comprising the positive electrode material according to claim 10 or 11.

13. A battery comprising:

the positive electrode according to claim 12;
a negative electrode; and
an electrolyte layer disposed between the positive electrode and the negative electrode.

# FIG. 1

# FIG. 2

# FIG. 3

## INTERNATIONAL SEARCH REPORT

| International application No. |
|---|
| **PCT/JP2022/019577** |

### A. CLASSIFICATION OF SUBJECT MATTER

*H01M 4/13*(2010.01)i; *H01M 4/36*(2006.01)i; *H01M 4/525*(2010.01)i; *H01M 10/052*(2010.01)i; *H01M 10/0562*(2010.01)i
FI: H01M4/525; H01M4/36 C; H01M10/0562; H01M4/13; H01M10/052

According to International Patent Classification (IPC) or to both national classification and IPC

### B. FIELDS SEARCHED

Minimum documentation searched (classification system followed by classification symbols)

H01M4/13; H01M4/36; H01M4/525; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-18735 A (TOYOTA MOTOR CORP.) 01 February 2016 (2016-02-01) claims, paragraphs [0020]-[0035], examples | 1-4, 6-13 |
| X | JP 2018-147555 A (TAIHEIYO CEMENT CORP.) 20 September 2018 (2018-09-20) claims, paragraphs [0013]-[0028], examples | 1-3 |
| A | JP 2011-526732 A (DAEJUNG EM CO., LTD.) 13 October 2011 (2011-10-13) | 1-13 |
| A | JP 2016-62683 A (SAMSUNG ELECTRONICS CO., LTD.) 25 April 2016 (2016-04-25) | 1-13 |
| P, A | JP 2021-193647 A (TOYOTA MOTOR CORP.) 23 December 2021 (2021-12-23) | 1-13 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 June 2022** | **05 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/019577**

| Patent document cited in search report | | | Publication date (day/month/year) | Patent family member(s) | | | Publication date (day/month/year) |
|---|---|---|---|---|---|---|---|
| JP | 2016-18735 | A | 01 February 2016 | US | 2016/0013479 | A1 | |
| | | | | claims, paragraphs [0030]-[0055], examples | | | |
| | | | | DE | 102015110661 | A | |
| | | | | CN | 105261745 | A | |
| | | | | KR | 10-2016-0007352 | A | |
| JP | 2018-147555 | A | 20 September 2018 | (Family: none) | | | |
| JP | 2011-526732 | A | 13 October 2011 | US | 2011/0052991 | A1 | |
| | | | | WO | 2011/025080 | A1 | |
| | | | | EP | 2403041 | A1 | |
| | | | | KR | 10-2011-0023067 | A | |
| | | | | CN | 102084521 | A | |
| JP | 2016-62683 | A | 25 April 2016 | US | 2016/0079597 | A1 | |
| | | | | KR | 10-2016-0032664 | A | |
| JP | 2021-193647 | A | 23 December 2021 | (Family: none) | | | |

Form PCT/ISA/210 (patent family annex) (January 2015)

**EP 4 350 801 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016018735 A